# EUROPEAN PATENT APPLICATION

(11) **EP 4 556 308 A1**
(43) Date of publication of application: **21.05.2025**
(21) Application number: 24207741.0
(22) Date of filing: 21.10.2024
(51) Int. Cl.: B60N 2/90

(54) **FILL AND ACTIVE DEFLATE OF MASSAGE BLADDERS**

(30) Priority: 26.10.2023 US 202363593271 P; 06.08.2024 US 202418795499
(71) Applicant: Lear Corporation, Southfield, MI 48033 (US)
(72) Inventor: KASPERCZYK, Grzegorz, 01-164 Warsaw (PL); ABDELLA, David, Michigan, 48336 (US); BLAIR, Sam, Michigan, 48306 (US); SZWELICKI, Artur, 02-994 Warsaw (PL)
(74) Representative: Haseltine Lake Kempner LLP

(57) **Abstract**

A method and apparatus includes a pump, at least one fluid bladder fluidly connected to the pump, the at least one fluid bladder moveable between an inflate state and a deflate state, and at least one valve downstream of the pump and the at least one fluid bladder. A connector is connected to the pump, the at least one fluid bladder, and the at least one valve. The pump selectively inflates the at least one fluid bladder to the inflate state, and the at least one valve selectively and actively deflates the at least one fluid bladder.

## Description

### RELATED APPLICATIONS

This application claims the benefit of U.S. Provisional Application No. 63/593,271, filed October 26, 2023, the entirety of which is herein incorporated by reference.

### BACKGROUND

Some vehicles may include seats associated with massage bladders that are selectively activated for occupant comfort. Seats include a valve arrangement to fluidly couple the bladders to a fluid supply.

### BRIEF DESCRIPTION OF THE DRAWINGS

Figure 1A is one example of an inflate and deflate system for a fluid bladder in an inflate state.
Figure 1B is the system of Figure 1A in a deflate state.
Figure 2A is a section view of an example of a connector as used with the system of Figures 1A-1B.
Figure 2B is an end view of the connector of Figure 2A and through which section A-A is taken.
Figure 2C is a front view of the connector of Figure 2A.
Figure 2D is a bottom view of the connector of Figure 2A.
Figure 3A is another example of an inflate and deflate system for a fluid bladder in an inflate state.
Figure 3B is the system of Figure 3A in a deflate state.
Figure 4A is another example of an inflate and deflate system for a fluid bladder in an inflate state.
Figure 4B is the system of Figure 4A in a deflate state.
Figure 5A is a section view of another example of a connector.
Figure 5B is an end view of the connector of Figure 5A and through which section A-A is taken.
Figure 5C is a front view of the connector of Figure 5A.
Figure 5D is a bottom view of the connector of Figure 5A.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundary less terms, and should be interpreted consistent with the way one skilled in the art would interpret those terms.

The subject disclosure is directed to an inflate/deflate system for fluid bladders in a vehicle seat. In one example, the fluid bladders comprise massage bladders and the system includes active deflation using a pump with a vacuum effect and/or a pneumatic connector with a vacuum effect (vacuum generator), or a pump with multiple valves.

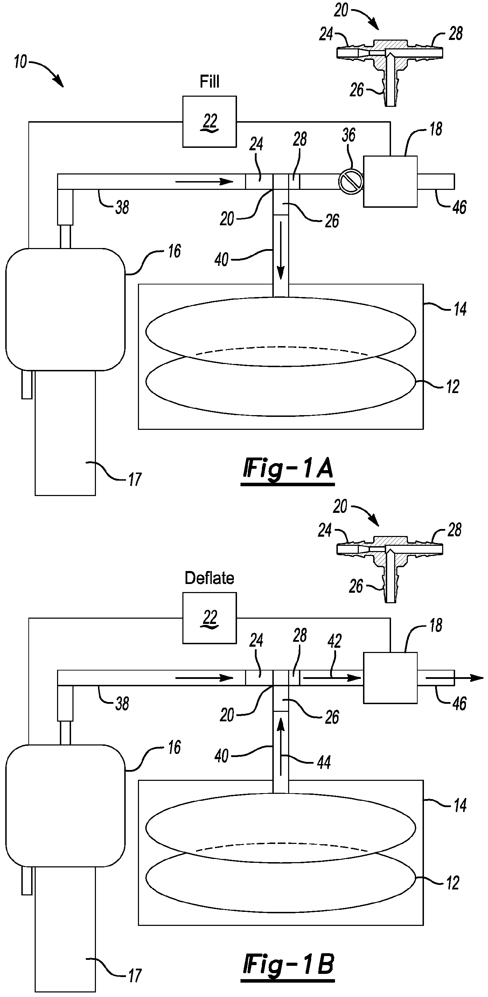

Figures 1A-1B show one example of an inflate/deflate system 10 for one or more fluid bladders 12 as used in a vehicle seat 14. Figure 1A shows an inflation state and Figure 1B shows a deflation state. The system 10 includes a pump 16, such as a pneumatic fluid pump for example, that is fluidly connected to the fluid bladder 12. The pump 16 is connected to an inlet 17 that supplies air into the pump 16. In one example, the fluid bladder 12 comprises a pneumatic cell that can inflate and deflate as air is used to fill or empty the cell. The fluid bladder 12 is moveable between an inflate state where fluid from the pump is added to the bladder 12 and a deflate state where fluid is exhausted from the bladder 12. At least one valve 18 is positioned downstream of the pump 16 and the at least one fluid bladder 12. In one example, the valve 18 comprise a two-way valve that is capable of inflating or deflating.

In one example, a connector 20 is connected to the pump 16, the at least one fluid bladder 12, and the at least one valve 18. In one example, the connector 20 comprises a multi-channel/multiple-prong connector. The pump 16 selectively inflates the at least one fluid bladder 12 to the inflate state and the at least one valve 18 selectively and actively deflates the at least one fluid bladder 12. In one example, when there are plurality of bladders 12, each bladder 12 is selectively and actively inflated and deflated. In one example, one or more actuators/ controllers 22 are selectively used to turn the pump 16 on/off and are selectively used to control the position of the valve 18.

The one or more controllers 22 can include a processor, memory, and one or more input and/or output (I/O) device interface(s) that are communicatively coupled via a local interface. The local interface can include, for example but not limited to, one or more buses and/or other wired or wireless connections. The controller 22 may be a hardware device for executing software, particularly software stored in memory. The controller 22 can be a custom made or commercially available processor, a central processing unit (CPU), an auxiliary processor among several processors associated with the computing device, a semiconductor based microprocessor (in the form of a microchip or chip set) or generally any device for executing software instructions. The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The software in the memory may include one or more separate programs, each of which includes an ordered listing of executable instructions for implementing logical functions. The controller 22 can be configured to execute software stored within the memory, to communicate data to and from the memory, and to generally control operations of the computing device pursuant to the software. Those skilled in the art who have the benefit of this description will be able to determine what types of controllers/actuators 22 should be used for these purposes.

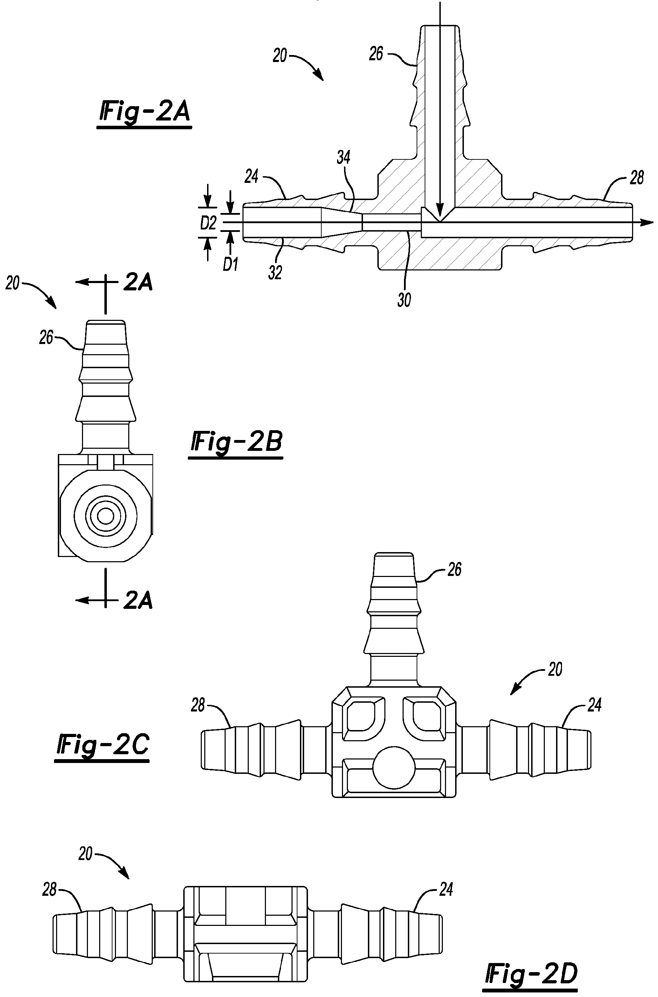

In one example, active deflation occurs utilizing a vacuum effect by way of a Venturi structure or vacuum generator. In the example shown in Figures 1A and 1B, the connector 20 creates a vacuum to draw fluid from the bladder 12. The connector 20 is a multi-channel connector that has a first channel 24 fluidly connected to the pump 16, a second channel 26 fluidly connected to the fluid bladder 12, and a third channel 28 fluidly connected to the valve 18. Figures 2A-2D show an example of the multi-channel connector 20. In this example, the connector 20 comprises a T-shape connector with the second channel 26 being perpendicular to first 24 and third 28 channels.

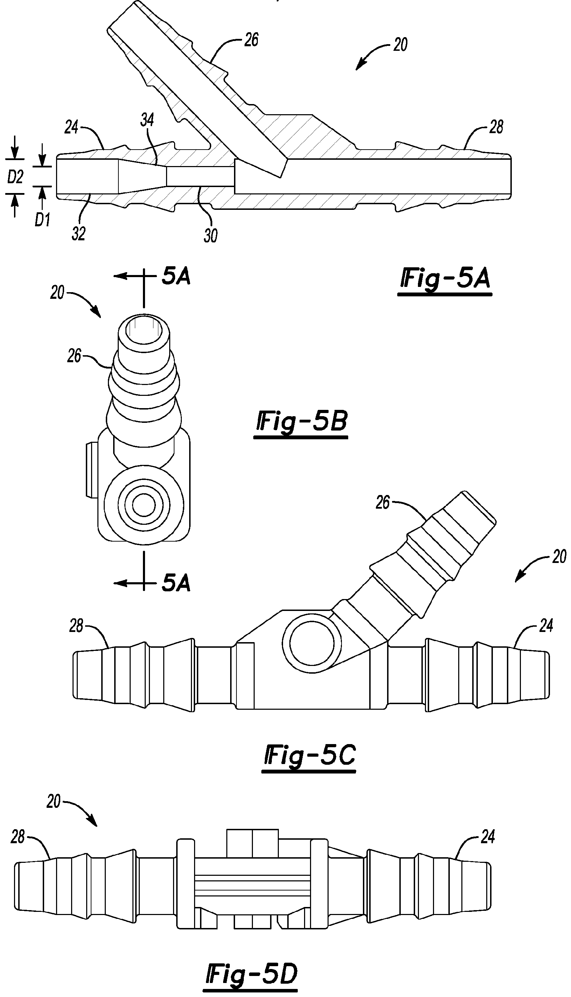

In another example, the connector 20 comprises an angled connector with second channel 26 being non-perpendicular to first 24 and third 28 channels. In one example, the second channel 26 is at an angle A of 45 degrees relative to an axis defined by the first 24 and third 28 channels (see Figure 5A). Other angles could be used for other configurations as needed. This configuration has optimized flow and a higher vacuum as compared to the T-shape connector configuration.

As shown in Figure 2A, one of the channels of the connector 20 has a restriction to create the vacuum effect. In this example, the first channel 24 has a variable diameter comprising a first portion 30 having a diameter D1 that is less than a diameter D2 of a second portion 32, where the second portion 32 is upstream of the first portion 30. Thus, at least two connected flow paths in the connector 20 have diameters different from each other. A first flow path segment within a connector body is defined by an internal connector surface surrounding the first flow path segment. A second flow path segment within the connector body is defined by an internal connector surface surrounding the second flow path segment. In one example, the first channel 24 includes a third portion 34 that transitions between the first portion 30 and the second portion 32. In one example, the third portion 34 comprises an increasing tapering portion where the diameter continuously increases from one end of the third portion 34 at the first diameter D1 to an opposite end of the third portion 34 at the second diameter D2. Air enters the fitting connector 20 through the first channel 24, the air speeds up as it goes through the narrowing channel portions 34 and 30, and then additional air gets sucked in through the second, e.g., top, channel 26 via a vacuum effect when the flow path widens back up at the third channel 28.

As shown in Figure 1A, the inflate state comprises a closed valve condition (see 36), e.g., a no flow condition, for the valve 18, and a pump on condition, e.g., active pump condition, for the pump 16. Fluid is pumped through a first fluid line 38, through the first 24 and second channels 26 of the connector 20, and then into a second fluid line 40 that feeds into the fluid bladder 12 for inflation. As shown in Figure 1B, the deflate state comprises an open valve condition (see 42), e.g., a positive flow condition, for the valve 18 while the pump 16 is in the pump-on condition. Fluid flows from the pump 16 into the first fluid line 38 and then into the first 24 and third 28 channels of the connector 20 where fluid speed increases flowing from the second portion 32 and into/through the first portion 30 of the first channel 24 creating a vacuum drawing fluid out of the fluid bladder and into the second fluid line 40 as indicated at 44 for deflation. Fluid exits the third channel 28 and enters a third fluid line 46 associated with the valve 18. The valve 18 comprises a two-way valve where there are two flow conditions, i.e. the valve 18 is configured to only stop or allow flow.

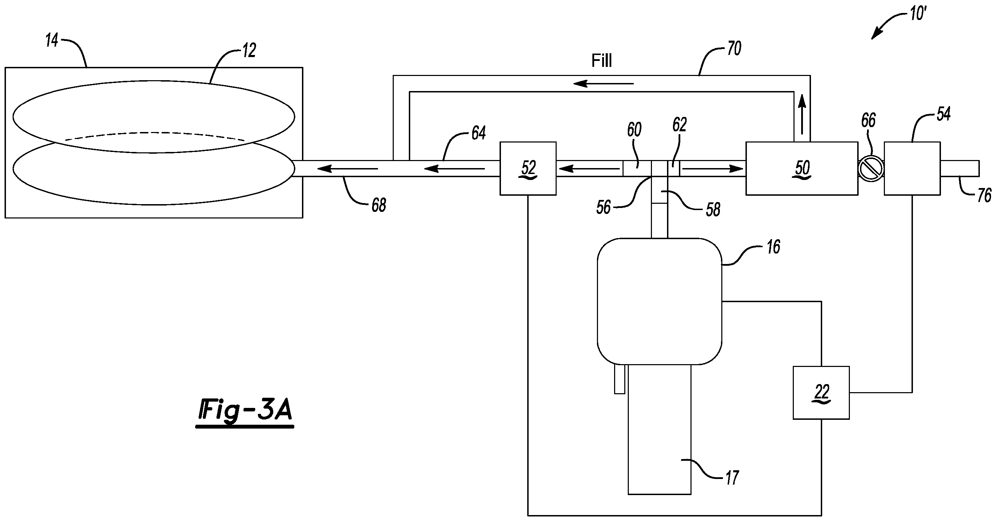

Figures 3A-3B show another example of an inflate/deflate system 10' for one or more fluid bladders 12 as used in a vehicle seat 14 where a vacuum is created by using a vacuum generator 50 to draw fluid from the bladder 12. In one example, the vacuum generator 50 uses a Venturi nozzle or other Venturi structure to create a zone of low pressure that allows atmospheric pressure outside the vacuum to push air in through an inlet port to create a suction force. In this example, the system 10' includes a first valve 52 and a second valve 54. A connector 56 comprises a multi-channel connector that has a first channel 58 fluidly connected to the pump 16, a second channel 60 fluidly connected to the fluid bladder 12 via the first valve 52, and a third channel 62 fluidly connected to the vacuum generator 50. The connector 56 can comprise a T-shape connector or an angled connector as described above.

In this example, both the first valve 52 and the second valve 54 comprise two-way valves, each having two flow conditions. The valves 52, 54 are configured to only stop or allow flow. In the inflate state (Figure 3A), the pump 16 is on, the first valve 52 is open to allow flow as indicated at 64, and the second valve 54, which is positioned downstream of the vacuum generator 50, is closed as indicated at 66. Fluid flows into the first channel 58 and then into both the second 60 and third 62 channels. Flow exiting the second channel 60 flows through the first valve 52 and into a first connection line 68 associated with the bladder 12. Flow exiting the third channel 62 flows through the vacuum generator 50 and enters a second connection line 70 that connects to the first connection line 68 at a location between the first valve 52 and the bladder 12. Fluid flows through the first connection line 68 and into the bladder 12 for inflation.

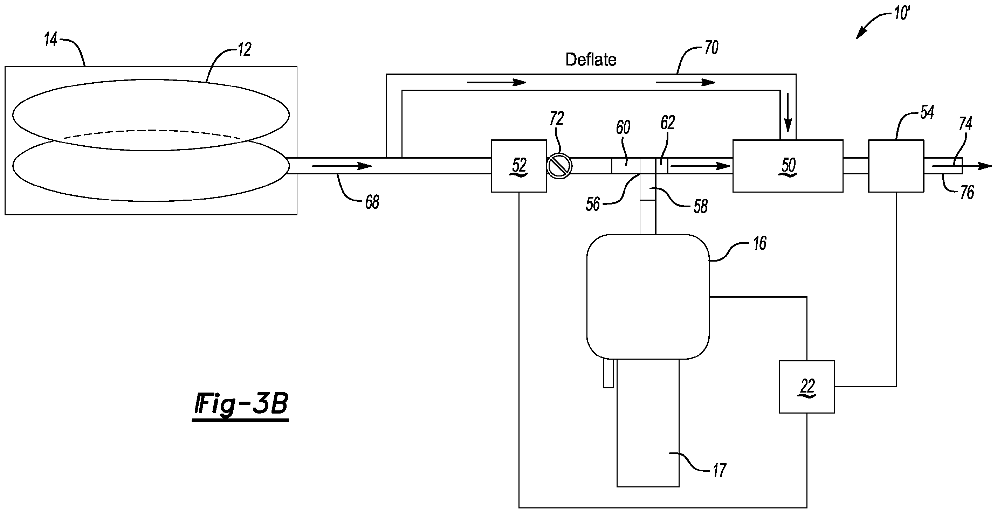

In the deflate state, (Figure 3B), the pump 16 is on, the first valve 52 is closed to prevent flow as indicated at 72, and the second valve 54 is open as indicated at 74. Fluid flows into the first channel 58 and then only into the third channel 62 as flow into the first channel 60 is blocked by the first valve 52 being closed. Flow exiting the third channel 62 flows through the vacuum generator 50 and enters a third connection line 76 associated with the second valve 54. Flow is pulled out of the bladder 12 by the vacuum generator 50 such that flow from the first connection line 68 is drawn into the second connection line 70, through the generator 50 and then through the second valve 54 and into the third connection line 76 for deflation. In one example, one or more controllers/actuators 22 are selectively used to turn the pump 16 on/off and are selectively used to control the position of the valves 52, 54. Those skilled in the art who have the benefit of this description will be able to determine what types of controllers/actuators should be used for these purposes.

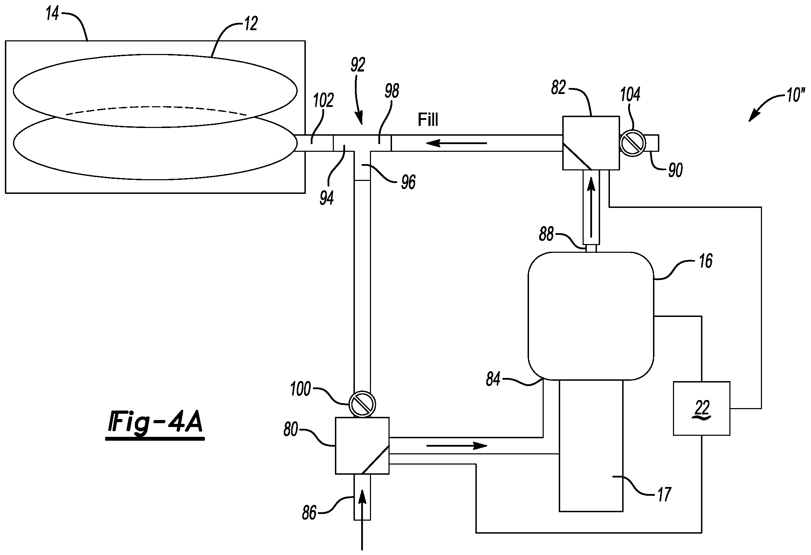

Figures 4A-4B show another example of an inflate/deflate system 10" for one or more fluid bladders 12 as used in a vehicle seat 14 where multiple valves are used for inflation and deflation. In this example, the system 10" includes a first valve 80 and a second valve 82, where the first valve 80 is upstream of a pump inlet 84 and is connected to an atmosphere inlet 86, and the second valve 82 is downstream of a pump outlet 88 and is connected to an atmosphere outlet 90. A multi-channel connector 92 has a first channel 94 fluidly connected to the bladder 12, a second channel 96 fluidly connected to the first valve 80, and a third channel 98 fluidly connected to the second valve 82. The connector 92 can comprise a T-shape connector or an angled connector as described above.

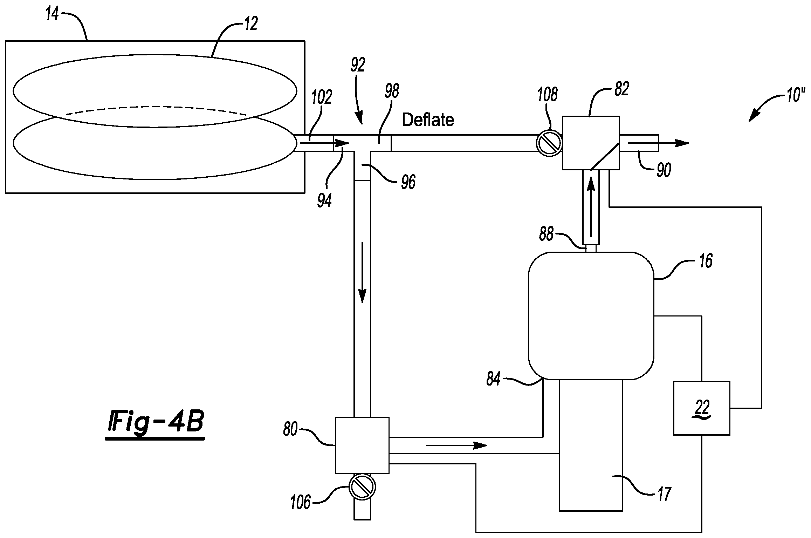

In this example, both the first valve 80 and the second valve 82 comprise two-way valves, each having two flow conditions. The valves 80, 82 are configured to only stop or allow flow. In the inflate state (Figure 4A), the first valve 80 is in a first position (see 100) preventing flow from a bladder inlet/outlet 102 to the pump inlet 84, and the second valve 82 is in a first position (see 104) preventing flow from the pump 16 exiting to the atmosphere outlet 90. Fluid flows from the atmosphere inlet 86, through the pump 16, through the second valve 82 to the bladder inlet/outlet 102 for inflation. In the deflate state (Figure 4B), the first valve 80 is in a second position (see 106) allowing flow from the bladder inlet/outlet 102 to the pump inlet 84, and the second valve 82 is in a second position (see 108) preventing flow from the pump 16 to the bladder inlet/outlet 102 while connecting to the atmosphere outlet 90. Fluid flows from the bladder inlet/outlet 102, through first valve 80 and the pump inlet 84, through the pump 16, and through the second valve 82 to the atmosphere outlet 90 for active deflation. In one example, one or more controllers/actuators 22 are used to selectively turn the pump 16 on/off and are used to selectively control the position of the valves 80, 82. Those skilled in the art who have the benefit of this description will be able to determine what types of controllers/actuators should be used for these purposes.

In one example, the seat 14 includes a plurality of fluid bladders 12, where each bladder 12 comprises a pneumatic cell that is separately expandable. The pump 16 comprises a single pump that is used with the plurality of fluid bladders 12.

In implementations, an apparatus may comprise: a pump; at least one fluid bladder fluidly connected to the pump, the at least one fluid bladder moveable between an inflate state and a deflate state; at least one valve downstream of the pump and the at least one fluid bladder; and a connector connected to the pump, the at least one fluid bladder, and the at least one valve, wherein the pump selectively inflates the at least one fluid bladder to the inflate state, and the at least one valve selectively and actively deflates the at least one fluid bladder.

The apparatus may further include one or more of the following either alone or in any combination.

The apparatus may include where active deflation utilizes a vacuum effect.

The apparatus may include where the connector is a multi-channel connector that has a first channel fluidly connected to the pump, a second channel fluidly connected to the at least one fluid bladder, and a third channel fluidly connected to the at least one valve.

The apparatus may include where the first channel has a variable diameter portion with a first portion having a diameter that is less than a diameter of a second portion, the second portion being upstream of the first portion.

The apparatus may include wherein: the inflate state comprises a closed valve condition for the at least one valve and a pump on condition for the pump; and the deflate state comprises an open valve condition for the at least one valve while the pump is in the pump on condition, and wherein fluid speed increases flowing from the second portion of the first channel and into the first portion of the first channel creating a vacuum drawing fluid out of the at least one fluid bladder.

The apparatus may include where the at least one valve comprises a two-way valve.

The apparatus may include a vacuum generator, and wherein the at least one valve comprises at least a first valve and a second valve, and wherein the connector comprises a multi-channel connector that has a first channel fluidly connected to the pump, a second channel fluidly connected to the at least one fluid bladder via the first valve, and a third channel fluidly connected to the vacuum generator.

The apparatus may include where the first valve and the second valve comprise two-way valves.

The apparatus may include where the at least one valve comprises at least a first valve and a second valve, and wherein the first valve is upstream of a pump inlet and is connected to an atmosphere inlet, and wherein the second valve is downstream of a pump outlet and is connected to an atmosphere outlet, and wherein: the inflate state comprises the first valve being in a first position preventing flow from a bladder inlet/outlet to a pump inlet, the second valve being in a first position preventing flow from the pump exiting to atmosphere, and wherein fluid flows from the atmosphere inlet, through the pump, through the second valve to the bladder inlet/outlet; and the deflate state comprises the first valve being in a second position allowing flow from the bladder inlet/outlet to the pump inlet, the second valve being in a second position preventing flow from the pump to the bladder inlet/outlet while connecting to atmosphere outlet, and wherein fluid flows from the bladder inlet/outlet, through the pump inlet, through the pump, and through the second valve to the atmosphere outlet.

The apparatus may include where the first valve and the second valve comprise two-way valves.

The apparatus may include where the at least one fluid bladder comprises a plurality of fluid bladders, and wherein the pump comprises a single pump used with the plurality of fluid bladders.

A method of actively deflating a massage bladder using a pump with a vacuum effect or a pump with multiple valves is also disclosed. In one example, the method includes fluidly connecting at least one fluid bladder to a pump, positioning at least one valve downstream of the pump and the at least one fluid bladder, selectively and actively inflating the at least one fluid bladder to an inflate state with the pump, and selectively and actively deflating the at least one fluid bladder to a deflate state through the at least one valve.

The method may further include one or more of the following steps either alone or in any combination.

The method may include generating a vacuum effect for active deflation. In one example, the vacuum effect is created by a Venturi structure or vacuum generator.

The method may include providing a multi-channel connector including at least a first channel, a second channel, and a third channel. The method can further include fluidly connecting the first channel to the pump, fluidly connecting the second channel to the at least one fluid bladder, and fluidly connecting the third channel to the at least one valve. The connector can comprise a T-shape connector or an angled connector as described above.

The method may include providing the first channel with a variable diameter portion with a first portion having a diameter that is less than a diameter of a second portion, the second portion being upstream of the first portion.

The method may include wherein the inflate state comprises the steps of closing the at least one valve and activating the pump, and the deflate state comprises the steps of opening the at least one valve and activating the pump resulting in fluid speed increasing by flowing through the first portion of the first channel creating a vacuum drawing fluid out of the at least one fluid bladder.

The method may include providing a vacuum generator, and wherein the at least one valve comprises at least a first valve and a second valve, and wherein the connector comprises a multi-channel connector including at least a first channel, a second channel, and a third channel, and including: fluidly connecting the first channel to the pump; fluidly connecting the second channel to the at least one fluid bladder via the first valve; and fluidly connecting the third channel to the vacuum generator.

The method may include providing the at least one valve as at least a first valve and a second valve, and wherein the first valve is upstream of a pump inlet and is connected to an atmosphere inlet, and wherein the second valve is downstream of a pump outlet and is connected to an atmosphere outlet, and wherein:
the inflate state comprises the steps of positioning the first valve being in a first position preventing flow from a bladder inlet/outlet to a pump inlet; positioning the second valve in a first position preventing flow from the pump exiting to atmosphere; and wherein fluid flows from the atmosphere inlet, through the pump, through the second valve to the bladder inlet/outlet; and
the deflate state comprises the steps of positioning the first valve in a second position allowing flow from the bladder inlet/outlet to the pump inlet; positioning the second valve in a second position preventing flow from the pump to the bladder inlet/outlet while connecting to atmosphere outlet; and wherein fluid flows from the bladder inlet/outlet, through the pump inlet, through the pump, and then through the second valve to the atmosphere outlet.

The method may include providing the first valve and the second valve as two-way valves.

The method may include providing the at least one fluid bladder as a plurality of fluid bladders, and wherein the pump comprises a single pump, and including controlling inflation and deflation of the plurality of fluid bladders with the single pump.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An apparatus comprising:
a pump;
at least one fluid bladder fluidly connected to the pump, the at least one fluid bladder moveable between an inflate state and a deflate state;
at least one valve downstream of the pump and the at least one fluid bladder; and
a connector connected to the pump, the at least one fluid bladder, and the at least one valve, wherein the pump selectively inflates the at least one fluid bladder to the inflate state, and the at least one valve selectively and actively deflates the at least one fluid bladder.

2. The apparatus of claim 1, wherein active deflation utilizes a vacuum effect.

3. The apparatus of claim 2, wherein the connector is a multi-channel connector that has a first channel fluidly connected to the pump, a second channel fluidly connected to the at least one fluid bladder, and a third channel fluidly connected to the at least one valve.

4. The apparatus of claim 2 or 3, including a vacuum generator, and wherein the at least one valve comprises at least a first valve and a second valve, and wherein the connector comprises a multi-channel connector that has a first channel fluidly connected to the pump, a second channel fluidly connected to the at least one fluid bladder via the first valve, and a third channel fluidly connected to the vacuum generator.

5. A method comprising:
fluidly connecting at least one fluid bladder to a pump;
positioning at least one valve downstream of the pump and the at least one fluid bladder;
selectively and actively inflating the at least one fluid bladder to an inflate state with the pump; and
selectively and actively deflating the at least one fluid bladder to a deflate state through the at least one valve.

6. The method of claim 5, including generating a vacuum effect for active deflation.

7. The method of claim 6, including providing a multi-channel connector having at least a first channel, a second channel, and a third channel, and including:
fluidly connecting the first channel to the pump;
fluidly connecting the second channel to the at least one fluid bladder; and
fluidly connecting the third channel to the at least one valve.

8. The apparatus of claim 3 or method of claim 7, wherein the first channel has a variable diameter portion with a first portion having a diameter that is less than a diameter of a second portion, the second portion being upstream of the first portion.

9. The apparatus of claim 8, wherein:
the inflate state comprises a closed valve condition for the at least one valve and a pump on condition for the pump; and
the deflate state comprises an open valve condition for the at least one valve while the pump is in the pump on condition, and wherein fluid speed increases flowing from the second portion of the first channel and into the first portion of the first channel creating a vacuum drawing fluid out of the at least one fluid bladder.

10. The apparatus of claim 8 or 9, wherein the at least one valve comprises a two-way valve.

11. The method of claim 8, wherein:
the inflate state includes closing the at least one valve and activating the pump; and
the deflate state includes opening the at least one valve and activating the pump resulting in fluid speed increasing by flowing from the second portion and into the first portion of the first channel creating a vacuum drawing fluid out of the at least one fluid bladder.

12. The method of any of claims 6 to 8 or 11, including a vacuum generator and a connector, and wherein the at least one valve comprises at least a first valve and a second valve, and wherein the connector comprises a multi-channel connector including at least a first channel, a second channel, and a third channel, and including:
fluidly connecting the first channel to the pump;
fluidly connecting the second channel to the at least one fluid bladder via the first valve; and
fluidly connecting the third channel to the vacuum generator.

13. The apparatus of any of claims 1 to 4 or 8 to 10 or method of any of claims 5 to 8 or 11 to 12, wherein the at least one valve comprises at least a first valve and a second valve, and wherein the first valve is upstream of a pump inlet and is connected to an atmosphere inlet, and wherein the second valve is downstream of a pump outlet and is connected to an atmosphere outlet, and wherein:
the inflate state comprises the first valve being in a first position preventing flow from a bladder inlet/outlet to a pump inlet, the second valve being in a first position preventing flow from the pump exiting to atmosphere, and wherein fluid flows from the atmosphere inlet, through the pump, through the second valve to the bladder inlet/outlet; and
the deflate state comprises the first valve being in a second position allowing flow from the bladder inlet/outlet to the pump inlet, the second valve being in a second position preventing flow from the pump to the bladder inlet/outlet while connecting to atmosphere outlet, and wherein fluid flows from the bladder inlet/outlet, through the pump inlet, through the pump, and then through the second valve to the atmosphere outlet.

14. The apparatus of claim 4 or 13 or method of claim 13, wherein the first valve and the second valve comprise two-way valves.

15. The apparatus of any of claims 1 to 4, 8 to 10 or 13 to 14 or method of any of claims 5 to 8 or 11 to 14, wherein the at least one fluid bladder comprises a plurality of fluid bladders, and wherein the pump comprises a single pump, e.g. for controlling inflation and deflation of the plurality of fluid bladders with the single pump.
